Europäisches Patentamt

European Patent Office

Office européen des brevets

(11) Veröffentlichungsnummer: **0 377 835**
**A2**

(12) **EUROPÄISCHE PATENTANMELDUNG**

(21) Anmeldenummer: **89122822.3**

(22) Anmeldetag: **11.12.89**

(51) Int. Cl.⁵: **G01P 3/46, G01P 3/486**

(30) Priorität: **10.01.89 DE 3900464**

(43) Veröffentlichungstag der Anmeldung:
**18.07.90 Patentblatt 90/29**

(84) Benannte Vertragsstaaten:
**DE FR GB IT SE**

(71) Anmelder: **Heidelberger Druckmaschinen Aktiengesellschaft**
**Kurfürsten-Anlage 52-60 Postfach 10 29 40**
**D-6900 Heidelberg 1(DE)**

(72) Erfinder: **Maass, Jürgen**
**Weidenweg 4**
**D-6908 Wiesloch(DE)**
Erfinder: **Meyer, Helmut**
**Multring 41**
**D-6940 Weinheim(DE)**

(74) Vertreter: **Stoltenberg, Baldo Heinz-Herbert et al**
**c/o Heidelberger Druckmaschinen AG**
**Kurfürsten-Anlage 52-60**
**D-6900 Heidelberg 1(DE)**

(54) **Vorrichtung zur Rotorlage- und Drehzahlermittlung eines Elektromotors.**

(57) Es ist eine Vorrichtung zur Rotordrehzahlermittlung eines Elektromotors (1) vorgesehen. Die Rotorstirnseite (13) weist mindestens eine Signalspur (14, 15, 16) auf, die von mindestens einem statorseitig zugeordneten, mit einer Auswerteschaltung (19) verbundenen Sensor (23, 24, 25) über eine optische Einheit (8) abgetastet wird, wobei die Signalspur (14, 15, 16) derart ausgebildet ist, daß sie den Sensor (23, 24, 25) alternativ in einen ersten, zweiten oder dritten Zustand versetzt, wobei die einzelnen Zustände unterschiedlich grobe Pegel (u max, u min, u mittel) erzeugen, und daß die Auswerteschaltung (19) pegelabhängig ansprechende Detektoren aufweist, um bestimmte Pegel (u max, u min, u mittel) derart auszublenden, daß aus zwei der drei Zustände eine Rotorlageerkennung und aus dem dritten Zustand die Drehzahlermittlung abgeleitet ist.

FIG. 2

## Vorrichtung zur Rotorlage- und Drehzahlermittlung eines Elektromotors

Die Erfindung betrifft eine Vorrichtung zur Motordrehzahlermittlung eines Elektromotors, mit mindestens einer am Rotor angeordneten Signalspur, die von einem zugeordneten, statorseitigen, mit einer Auswerteschaltung verbundenen Sensor abgetastet wird.

Eine derartige Vorrichtung ist aus der deutschen Offenlegungsschrift 34 18 153 bekannt. Der Läufer dieses bekannten Motors weist auf seiner peripheren Oberfläche eine ringförmige, magnetisierbare Schicht auf, die von einem Magnetkopf gelesen wird. Die Magnetkopfinformation wird zur Drehzahlermittlung einer Auswerteschaltung zugeführt. Der vom Sensor stammende Informationsgehalt dieser bekannten Vorrichtung ist begrenzt.

Der Erfindung liegt daher die Aufgabe zugrunde, eine Vorrichtung der eingangs genannten Art zu schaffen, die bei einfachem Aufbau eine Vielzahl an Informationen über den Betriebszustand des Elektromotors liefert. Insbesondere soll auf einfache Weise eine Rotorlageerkennung -vorzugsweise zu Kommutierungszwecken- und eine Drehzahlermittlung möglich sein.

Diese Aufgabe wird erfindungsgemäß dadurch gelöst, daß die Signalspur derart ausgebildet ist, daß sie den Sensor alternativ in einen ersten, zweiten oder dritten Zustand versetzt, wobei die einzelnen Zustände unterschiedlich große Pegel erzeugen, und daß die Auswerteschaltung pegelabängig ansprechende Detektoren aufweist, um bestimmte Signale derart auszublenden, daß aus zwei der drei Zustände eine Rotorlageerkennung und aus dem dritten Zustand die Drehzahlermittlung abgeleitet ist. Durch die erfindungsgemäße Ausbildung der Signalspur derart, daß diese die drei genannten Zustände herbeiführen kann, lassen sich unterschiedliche Informationsinhalte über den Betriebszustand des Elektromotors ermitteln. Dennoch braucht die Signalspur nur von einem Sensor abgetastet zu werden, so daß nur wenige Bauteile eingesetzt werden müssen. Um die unterschiedlichen Informationen separieren zu können, ist erfindungsgemäß eine Ausblendtechnik vorgeschlagen, diese wird mit pegelabhängig ansprechenden Detektoren realisiert. Die von dem Sensor stammenden Signale werden -gegebenenfalls unter zuvoriger Bearbeitung- von den Detektoren im Hinblick auf ihre Pegel sortiert, wobei zwei der Zustände eine Rotorlageerkennung ermöglichen und der dritte Zustand der Drehzahlermittlung dient. Dabei können für die Informationsgebung bzw. -übertragung unterschiedliche Möglichkeiten eingesetzt werden, so eignet sich insbeson dere eine Lichtübertragung; es können jedoch auch elektrisch oder aber magnetisch arbeitende Mittel eingesetzt werden.

Denkbar wäre auch eine Informationsübertragung mittels Näherungsschalter. Letztere wiederum können induktiv oder kapazitiv wirken. Das erfindungsgemäße System ermöglicht mithin, daß mit ein und derselben Anordnung -also ohne den Einsatz zusätzlicher Bauelemente- Betriebszustände des Motors erfaßbar sind. Insbesondere läßt sich über die Rotorlageerkennung eine Kommutierungsteuerung des Eletromotores vornehmen, wobei überdies auch noch ein Tacho-Signal zur Verfügung steht, um die Rotordrehzahl zu ermitteln.

Nach einer Weiterbildung der Erfindung ist vorgesehen, daß die Pegel elektrisch Spannungspegel sind. Mithin ist für die Informationsauswertung der Einsatz elektronischer Schaltungen möglich.

Die Anordnung kann so getroffen sein, daß eine optische Abtastung des Rotors erfolgt. Hierzu weist die Signalspur Zonen unterschiedlich starker Lichtreflexion auf und der Sensor ist als fotoelektrisches Bauelement ausgebildet.

Vorzugsweise sind erste Zonen starker (insbesondere spiegelnder) und dritte Zonen mittelkräftiger Lichtreflexion vorgesehen; ferner sind zweite, lichtabsorbierende, insbesondere dunkle Zonen ausgebildet, wobei diese drei unterschiedlichen Zonen die drei Zustände herbeiführen.

Für einen gedrängten Aufbau trotz großer Informationsfülle befinden sich die den dritten Zustand herbeiführenden Zonen innerhalb mindestens einer der übrigen Zonen. Vorzugsweise kann vorgesehen sein, daß die Zonen mittelkräftiger Lichtreflexion innerhalb der lichtabsorbierenden Zonen angeordnet sind.

Insbesondere für die Drehzahlerfassung ist vorgesehen, daß die einem Zustand zugeordneten Zonen als gleichmäßig große und gleichmäßig voneinander beabstandete Abschnitte ausgebildet sind, die eine um den Rotor herumlaufende Reihe bilden. Diese Reihe kann signalspurabhängige Versetzungen aufweisen.

Je nach Art des Elektromotors sind mehrere, vorzugsweise drei Signalsspuren vorgesehen, denen jeweils ein Sensor zugeordnet ist.

Die zuvor genannten, einem Zustand zugeordneten Zonen können dann auf unterschiedlichen Signalspuren liegen, wobei diese Zonen vorzugsweise als dritte Zonen mit mittelkräfiger Lichtreflexion ausgebildet sind.

Die Anordnung kann so getroffen sein, daß die dritten Zonen zur Bildung eines aus Spannungsimpulsen bestehenden Tachosignals herangezogen sind, das ein Maß für die Rotordrehzahl darstellt. Insbesondere können die Spannungsimpulse als Rechteckimpulse ausgebildet sein, wobei die Anzahl der Impul se pro Zeiteinheit mit der Rotordrehzahl variiert, so daß durch Impulszählung ein Rückschluß auf die Rotordrehzahl möglich ist.

Nach einer Weiterbildung der Erfindung ist vorgesehen, daß die ersten Zonen eine Maximalspannung u max, die zweiten Zonen eine Minimalspannung u min und die dritten Zonen eine mittlere Spannung u mittel an den Sensoren erzeugen. Mithin gelangen drei Spannungen mit unterschiedlichem Pegel zum Einsatz, die jeweils einen Informationsinhalt tragen. Dabei kann so vorgegangen sein, daß die Minimalspannung u min ca. bzw. gleich 0 Volt ist.

Für eine Kommutierungssteuerung des Motors ist es erforderlich, daß die der Rotorlageerkennung dienenden Zonen entsprechend der Polteilung des Elektromotores um den Rotor herum verlaufend angeordnet sind. Der konkrete Aufbau einer derartigen Kommutierungsanordnung ist allgemein bekannt und braucht daher hier nicht näher beschrieben zu werden. Vorzugsweise werden thyristorbestückte Steuerschaltungen eingesetzt.

Für die erfindungsgemäße Signalverarbeitung ist vorgesehen, daß die Detektoren zur Auswertung der Spannungen einen ersten Schwellenwert, der zwischen der mittleren Spannung u mittel und der Maximalspannung u max liegt sowie einem zweiten Schwellenwert, der zwischen der Minimalspannung u min und der mittleren Spannung u mittel liegt, verwenden. Es werden nur die Signale, die oberhalb des ersten bzw. oberhalb des zweiten Schwellenwertes liegen, berücksichtigt. Da jedoch die unterschiedlichen Zonen unterschiedliche Zustände erzeugen, die sich durch die Pegel der Spannungen unterscheiden, erfolgt demgemäß über die Schwellenwerte eine Separierung der Signale.

Insbesondere ist die Anordnung so getroffen, daß aus dem größer als der erste Schwellenwert ausgebildeten Spannungsimpulsen der Sensoren Kommutierungssignale und aus den größer als der zweite, jedoch kleiner als der erste Schwellenwert ausgebildeten Spannungsimpulsen der Sensoren Tachosignale gebildet werden.

Besonders günstig ist es, die Signalspuren auf einer der Rotorstirnseiten anzuordnen. Sofern beispielsweise drei Signalspuren eingesetzt sind, so können diese auf konzentrisch zur Drehachse des Motors verlaufenden Ringen vorgesehen sein. Hierbei weisen die Ringe unterschiedliche Durchmesser auf und jedem Ring ist ein Sensor zugeordnet.

Schließlich ist es für einen Einsatz der Erfindung bei einem Elektromotor günstig, wenn dieser als bürstenloser Gleichstrommotor ausgebildet ist.

Die Zeichnungen veranschaulichen die Erfindung anhand eines Ausführungsbeispiels und zwar zeigt:

Fig. 1 einen Längsschnitt eines Teils eines mit der erfindungsgemäßen Vorrichtung versehenen Elektromotors,

Fig. 2 den Rotor des Elektromotors gemäß Fig. 1 in schematischer Darstellung, dessen Signalspuren aufweisende Stirnfläche optisch abgetastet wird,

Fig. 3 ein Diagramm, welches die Spannungsverläufe an optischen Sensoren in Bezug auf die Signalspuren darstellt,

Fig. 4 ein der Fig. 3 entsprechendes Diagramm, jedoch mit andere Informationen betreffenden Spannungsverläufen,

Fig. 5 ein Schaltbild einer Auswerteschaltung und

Fig. 6 ein Blockschaltbild zur Erzeugung eines der Rotordrehzahlerfassung dienenden Tachosignals.

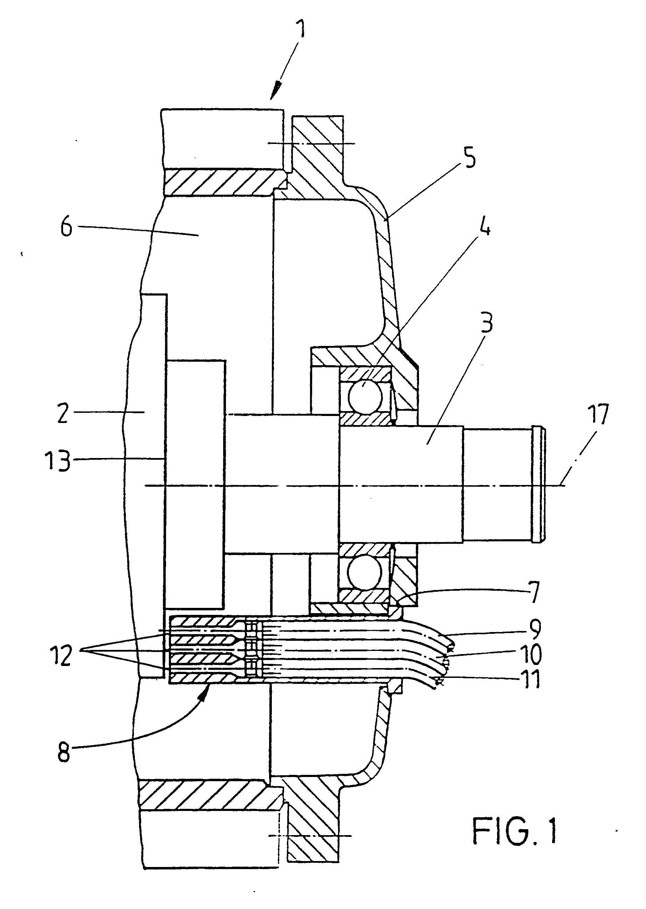

Die Fig. 1 zeigt in Teilansicht einen Motor 1 in Schnittdarstellung. Der Motor 1 weist einen Rotor 2 auf, dessen Welle 3 über Kugellager 4 in einem Motorgehäuse 5 gelagert ist.

Innerhalb des Gehäuses 5 befinden sich statorseitige Spulen 6.

Das Gehäuse 5 ist mit einer Aussparung 7 versehen, in welche eine optische Einheit 8 eingesetzt ist. Diese optische Einheit 8 weist drei Lichtleiterstränge 9,10 und 11 auf, wobei jeder Lichtleiterstrang 9,10,11 aus einer Hin- und einer Rückleitung besteht. Die Stirnflächen 12 der Lichtleiterstränge 9,10 und 11 liegen der Rotorstirnseite 13 mit geringfügigem Abstand gegenüber.

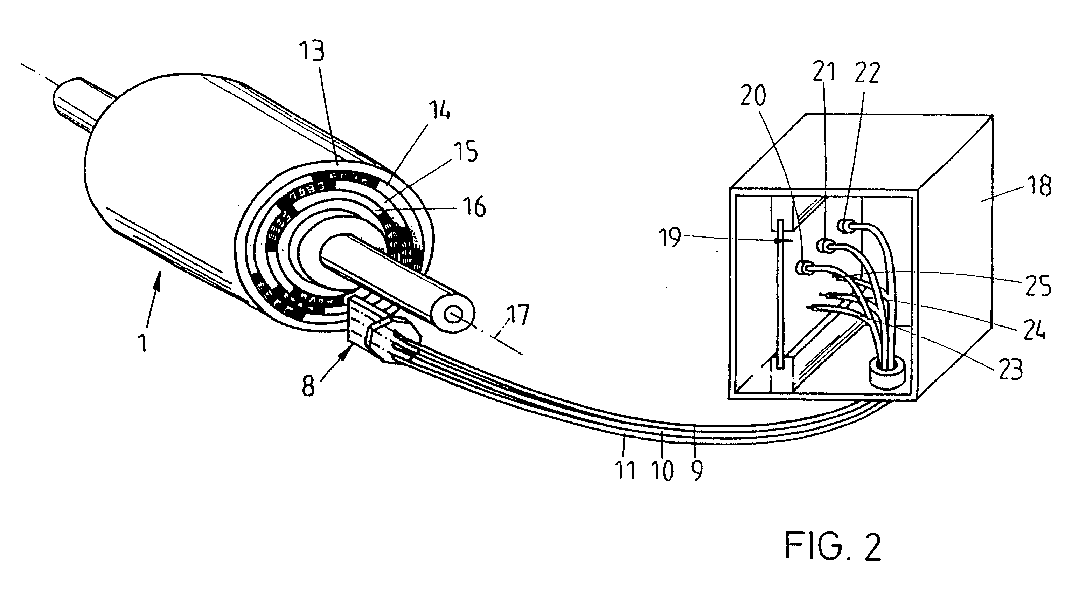

Aus der Fig. 2 ist ersichtlich, daß die Rotorstirnseite 13 drei unterschiedliche Signalspuren 14,15 und 16 aufweist, die als konzentrisch zur Mittelachse 17 der Welle 3 liegende Ringe ausgebildet sind.

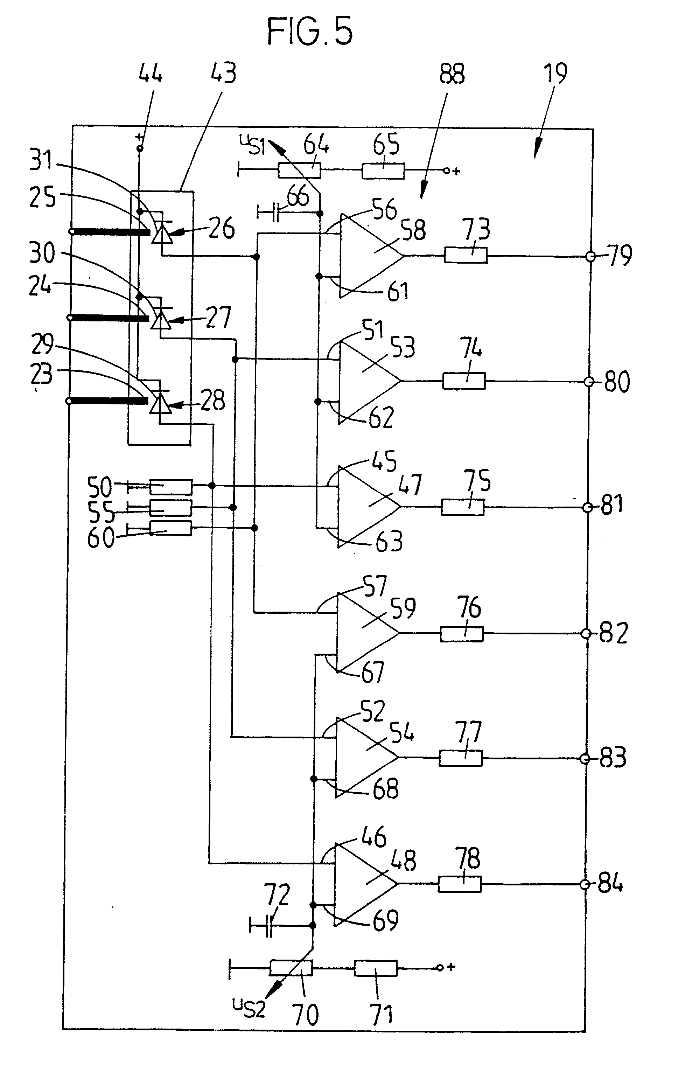

Die Lichtleiterstränge 9,10 und 11 führen zu einem Gehäuse 18, in dem eine in Fig. 2 nicht detailliert dargestellte Auswerteschaltung 19 untergebracht ist. Dabei ist die Anordnung so getroffen, daß die Hinleiter der Lichtleiterstränge 9,10 und 11 mit Lichtsignalgebern 20,21 und 22 in Verbindung stehen, und daß die Enden 23,24 und 25 der Rückleiter zu Sensoren 26,27 und 28 führen. Die Sensoren 26,27 und 28 sind -gemäß Fig. 5- als fotoelekrische Bauelemente, nämlich Fotodioden 29,30 und 31 ausgebildet.

Während des Betriebes wird das von den Lichtsignalgebern 20,21 und 22 erzeugte Licht über die Hinleiter der Lichtleiterstränge 9,10 und 11 bis zu den Stirnflächen 12 geführt und tritt dort unter Auftreffen auf die Signalspuren 14,15 und 16 aus. Das von den Signalspuren 14,15 und 16 reflektierte Licht gelangt zu den Stirnflächen 12 der Rückleiter der Lichtleiterstränge 9,10 und 11 und wird zu den Fotodioden 29,30 und 31 geführt. Abschnitte der Rückleiter sind in der Fig. 5 durch schwarz angelegte Balken gekennzeichnet.

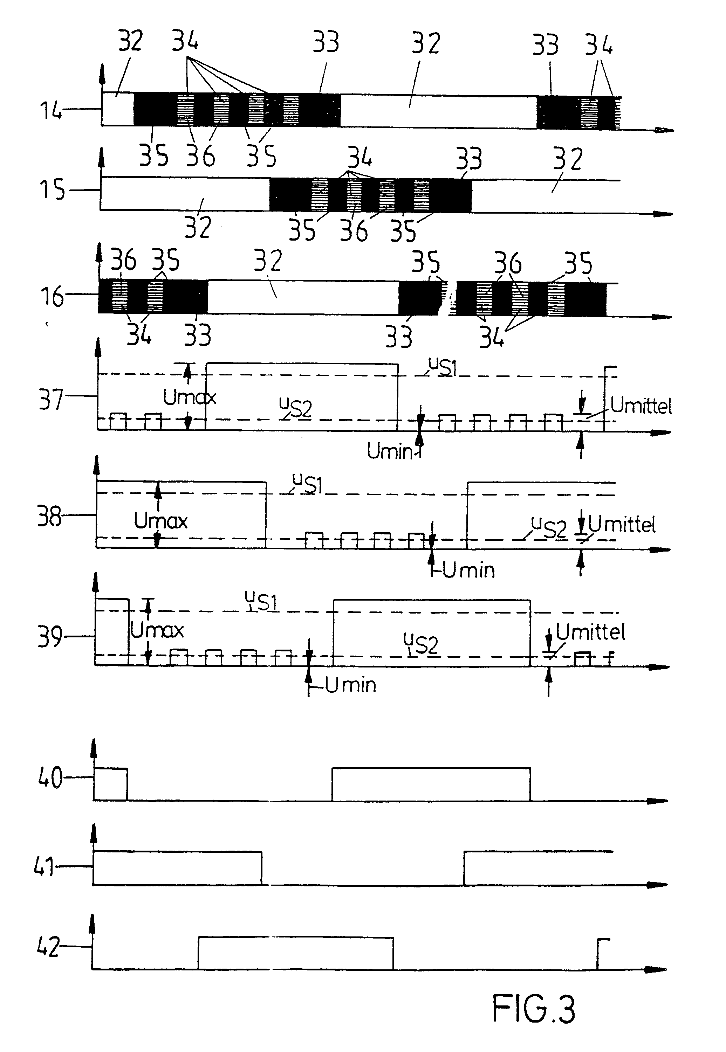

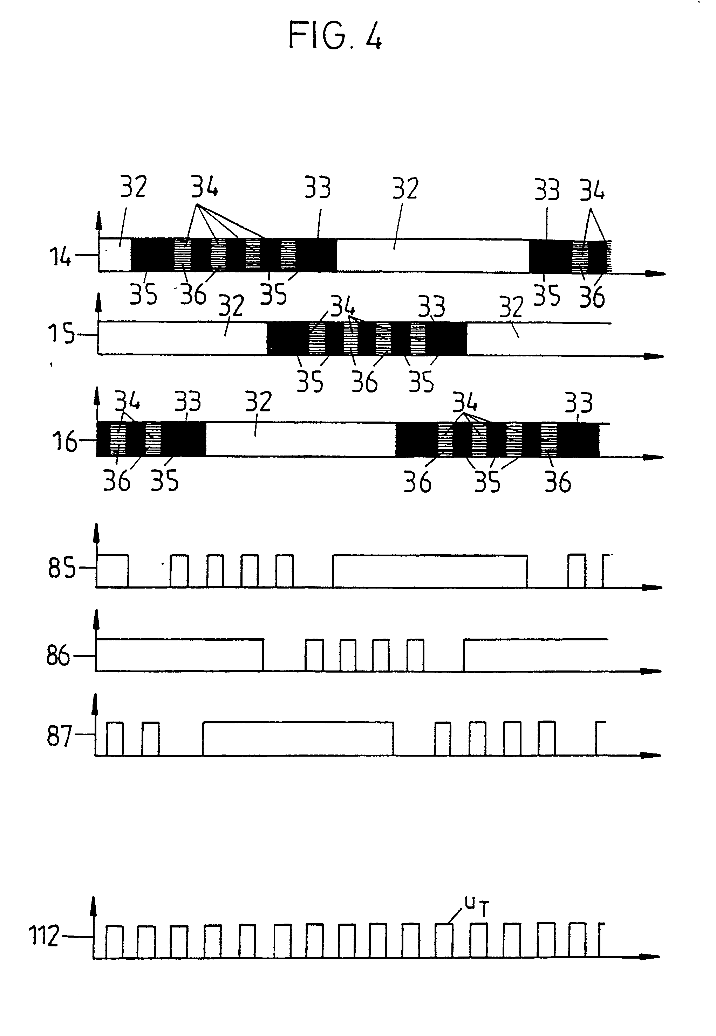

Wie bereits in der Fig. 2 angedeutet, weisen die Signalspuren 14,15 und 16 unterschiedliche Zonen 32,33 und 34 auf (vergl. Figuren 3 und 4). In der Praxis ist dabei so vorgegangen, daß erste Zonen 32 eine Oberfläche mit starker (insbesonderer spiegelnder) Lichtreflektion besitzen und daß zweite, lichtabsorbierende Zonen 33, die insbesondere aus dunklen Bereichen bestehen, vorhanden sind. Dritte Zonen 34 sind derart gestaltet, daß sie eine mittelkräftige Lichtreflektion bewirken. Beispielsweise kann dabei so vorgegangen sein, daß eine spiegelnde Fläche mit einem Punktraster versehen ist, welches aus dunkelfarbigen, insbesondere schwarzen Punkten besteht. Selbstverständlich kann die zweite Zone 33 aus einem matten Schwarz bestehen, während die dritte Zone 34 von einem Grauton gebildet ist. Demgegenüber könnte die erste Zone 32 ein Weißton sein oder aber auch eine metallisch-spiegelnde Fläche.

Die Anordnung der Zonen 32,33 und 34 ist entsprechend der Polteilung des Elektromotors 1 vorgenommen, das heißt jede Signalspur 14,15 und 16 weist abwechselnd zweite Zonen 33 und erste Zonen 32 auf, wobei diese Zonen 32 und 33 im Hinblick auf die drei Signalspuren 14,15 und 16 versetzt zueinander liegen.

Insbesondere ist jedoch vorgesehen, daß innerhalb der zweiten Zonen 33 die dritten Zonen 34 ausgebildet sind. Dieses erfolgt derart, daß sich an einen nichtreflektierenden Abschnitt 35 ein mittelkräftig reflektierender Abschnitt 36 anschließt, dem wiederum ein nichtreflektierender Abschnitt 35 folgt usw.. Insgesamt sind innerhalb einer zwischen zwei ersten Zonen 32 liegenden zweiten Zone 33 vier Abschnitte 36 vorgesehen, die ein mittelkräftiges Reflektionsvermögen aufweisen. Mithin liegt eine aus vier Abschnitten 36 sich zusammensetzende dritte Zone 34 innerhalb einer, sich aus fünf Abschnitten 35 zusammensetzenden zweiten Zone 33.

Die Figuren 3 und 4 zeigen unterschiedliche Spannungsdiagramme, die den einzelnen Signalspuren 14,15 und 16 zugeordnet sind. So resultiert gemäß Fig. 3 das Diagramm 37 aus der Signalspur 16, das Diagramm 38 aus der Signalspur 15 und das Diagramm 39 aus der Signalspur 14; das Diagramm 40 ergibt sich aus dem Diagramm 39, das Diagramm 41 aus dem Diagramm 38 und das Diagramm 42 aus dem Diagramm 37 (wie dieses im nachfolgenden noch näher erläutert wird).

Aus der Fig. 3 ist ferner ersichtlich, daß die ersten Zonen 32 mit starker Lichtreflektion ein entsprechend starkes Licht zu der zugehörigen Fotodiode 29,30 bzw. 31 leiten, so daß diese entsprechend der Länge der stark reflektierenden ersten Zone 32 einen Spannungsimpuls zur Folge haben, dessen Amplitude einer Maximalspannung u max entspricht. Die dritten Zonen 34 mit mittelkräftiger Lichtreflexion führen zu Spannungsimpulsen, deren Amplituden mit einer mittleren Spannung u mittel gekennzeichnet sind. Die zweiten Zonen 33, welche eine lichtabsorbierende Wirkung aufweisen, führen dazu, daß das zugeführte Licht so gut wie nicht reflektiert wird, das heißt die zugehörigen Fotodioden 29,30 bzw. 31 erhalten so gut wie kein Signal, so daß hieraus die Minimalspannung u min resultiert, die in den vorliegenden Ausführungsbeispielen 0 Volt ist, das heißt u min befindet sich auf der jeweiligen Abszisse der Diagramme.

Für das weitere Verständnis soll zunächst die Schaltung gemäß Fig. 5 erklärt werden. Die Fotodioden 29,30 und 31 befinden sich auf einer speziellen Halterung 43. Ihre Katoden stehen mit dem Anschluß 44 des Pluspoles einer nicht dargestellten Betriebsspannungsquelle in Verbindung. Die Katode der Fotodiode 29 führt zu den Anschlüssen 45 und 46 von Komparatoren 47 und 48 und ist ferner über einen Widerstand 50 an Masse gelegt. Die Katode der Fotodiode 30 führt zu den Eingangsanschlüssen 51 und 52 von Komparatoren 53 und 54 und ist ebenfalls über einen Widerstand 55 an Masse ge legt. Die Katode der Fotodiode 31 führt zu Eingangsanschlüssen 56 und 57 von Komparatoren 58 und 59 und steht über einen Widerstand 60 mit Masse in Verbindung. Die Vergleichseingänge 61,62 und 63 der Koparatoren 58,53 und 47 führen zu dem Schleifer eines Potentiometer 64, dessen Widerstandsanordnung einerseits an Masse und andererseits über einen Widerstand 65 am Pluspol der Betriebsspannungsquelle liegt. Der Schleifer des Potentiometers 64 steht ferner über einen Kondensator 60 mit Masse in Verbindung. Die Vergleichseingänge 67,68 und 69 der Komparatoren 59,54 und 48 stehen mit dem Schleifer eines Potentiometers 70 in Verbindung, dessen Widerstandanordnung einerseits an Masse angeschlossen und andererseits über einen Widerstand 71 mit dem Pluspol der Betriebsspannungsquelle verbunden ist. Auch hier ist ein Konsator 72 vorgesehen, der gegen Masse geschaltet ist und mit dem Schleifer des Potentiometers 70 in Verbindung steht. Die Ausgänge der Komparatoren 58,53,47,59,54 und 48 stehen über Widerstände 73,74,75,76,77 und 78 mit Ausgangsanschlüssen 79,80,81,82,83 und 84 in Verbindung.

Die Anordnung ist nun so getroffen, daß an den Potentiometern 64 und 70 ein erster Schwellenwert us 1 bzw. ein zweiter Schwellenwert us 2 eingestellt wird. Die Größe dieser Schwellenwerte sind aus Fig. 3 in den Diagrammen 37, 38 und 39 ersichtlich. Dabei liegt der erste Schwellenwert us 1 zwischen der mittleren Spannung u mittel und der Maximalspan nung u max. Der zweite Schwellenwert us 2 liegt zwischen der Minimalspannung u min und der mittleren Spannung u mittel.

Die aus den Diagrammen 37 bis 39 hervorgehenden Spannungsverläufe, die von den Fotodioden 29,30 und 31 an die Anschlüsse 56,51,45,57,52 und 46 der Komparatoren 58,53,47,59,54 und 48 angelegt werden, werden mit dem ersten Schwellenwert us 1, der an den Vergleichseingängen 61,62 und 63 anliegt, verglichen, wodurch es an den Anschlüssen 79,80 und 81 zu den Spannungsverläufen gemäß der Diagramme 40,41 und 42 der Fig. 3 kommt.

Entsprechendes gilt für die Anschlüsse 82,83 und 84, wobei hier jedoch die Komparatoren 59,54 und 48 einen Vergleich der Spannungsverläufe gemäß der Diagramme 37,38 und 39 mit dem zweiten Schwellenwert us 2 durchführen. Dieses führt zu einem Spannungsverlauf gemäß der Diagramme 85,86 und 87 der Fig. 4. Mithin läßt sich sagen, daß die Komparatoren 58,53,47,59,54 und 48 - zusammen mit ihrer Beschaltung- Detektoren 88 darstellen, die eine Auswertung der durch die ersten, zweiten und dritten Zonen 32,33 und 34 der Signalspuren 14,15 und 16 beeinflußten Sensoren 26,27 und 28 vornehmen.

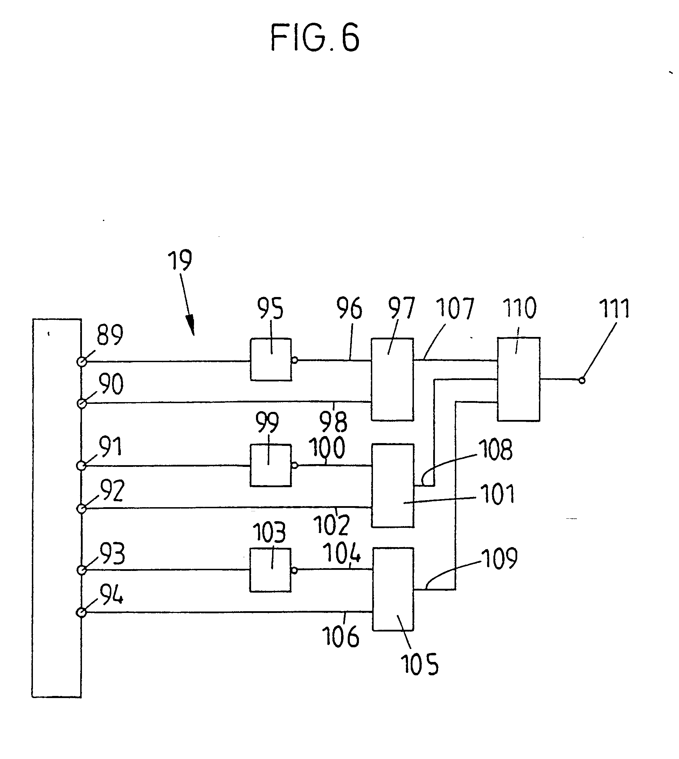

Die Fig. 6 zeigt einen weiteren Abschnitt der Auswerteschaltung 19. Die Anschlußklemmen 89,90,91,92,93 und 94 sind -entsprechend der aufgeführten Reihenfolge- mit den Anschlüs sen 79,82,80,83,81 und 84 verbunden. Die Anschlußklemme 89 steht über einen Inverter 95 mit dem Eingang 96 eines Und-Gliedes 97 in Verbindung. Die Anschlußklemme 90 ist an den zweiten Eingang 98 des Und-Gliedes 97 angeschlossen. Die Anschlußklemme 91 führt über einen Inverter 99 zu dem Eingang 100 eines weiteren Und-Gliedes 101, während der zweite Anschluß 102 des Und-Gliedes 101 mit der Anschlußklemme 92 verbunden ist. Die Anschlußklemme 93 steht über einen Inverter 103 mit dem Eingang 104 eines dritten Und-Gliedes 105 in Verbindung und die Anschlußklemme 94 ist an den zweiten Eingang 106 des Und-Gliedes 105 angeschlossen. Die Ausgänge 107,108 und 109 der Und-Glieder 97,101 und 105 führen zu den drei Eingängen eines Oder-Gliedes 110. Der Ausgangsanschluß des Oder-Gliedes 110 ist mit 111 bezeichnet.

Diese Schaltungsanordnung führt dazu, daß am Ausgang 111 des Oder-Gliedes 110 die Spannung gemäß Diagramm 112 der Fig. 4 liegt. Mithin wird eine kontinuierliche Spannungsimpulsfolge aus den dritten Zonen 34 der Signalspuren 14,15 und 16 gebildet. Die Impulsfolge ist je Zeiteinheit umso größer, je größer die Drehzahl des Rotors 2 des Elektromotors 1 ist.

Aus alledem ist ersichtlich, daß die Impulsfolge der Diagramme 40,41 und 42 als Kommutierungssignale des Elektromotors 1 verwendet werden können, der vorzugsweise als bürstenloser Gleichstrommotor ausgebildet ist. Die Impulsfolge des Diagramms 112 stellt ein Tachosignal ut dar, das mit einer entsprechenden Zählerschaltung zur Drehzahlbestimmung herangezogen werden kann.

Mithin werden die gleichen Sensoren 26,27 und 28 sowohl für die Rotorstellungsbestimmung als auch für die Drehzahlbestimmung herangezogen.

Alle in der Beschreibung erwähnten und in der Zeichnung dargestellten neuen Merkmale sind erfindungswesentlich, auch soweit sie in den Ansprüchen nicht ausdrücklich beansprucht sind.

## Ansprüche

1. Vorrichtung zur Rotordrehzahlermittlung eines Elektromotors, mit mindestens einer am Rotor angeordneten Signalspur, die von einem zugeordneten, statorseitigen, mit einer Auswerteschaltung verbundenen Sensor abgetastet wird, dadurch gekennzeichnet, daß die Signalspur (14,15,16) derart ausgebildet ist, daß sie den Sensor (23,24,25) alternativ in einen ersten, zweiten oder dritten Zustand versetzt, wobei die einzelnen Zustände unterschiedlich große Pegel (u max, u min, u mittel) erzeugen, und daß die Auswerteschaltung (19) pegelabhängig ansprechende Detektoren (88) aufweist, um bestimmte Pegel (u max, u min, u mittel) derart auszublenden, daß aus zwei der drei Zustände eine Rotorlageerkennung und aus dem dritten Zustand die Drehzahlermittlung abgeleitet ist.

2. Vorrichtung, insbesondere nach Anspruch 1, dadurch gekennzeichnet, daß die Pegel elekrische Spannungspegel (u max, u min und u mittel) sind.

3. Vorrichtung, insbesondere nach einem oder mehreren der vorhergehenden Ansprüche, dadurch gekennzeichnet, daß die Signalspur (14,15,16) Zonen (32,33,34) unterschiedlich starker Lichtreflexion aufweist, und daß der Sensor (26,27,28) als fotoelektrisches Bauelement (Fotodioden 29,30,31) ausgebildet ist.

4. Vorrichtung, insbesondere nach Anspruch 3, gekennzeichnet durch erste Zonen (32) starker (insbesondere spiegelnder) und dritte Zonen (34) mittelkräftiger Lichtreflexion sowie zweite, lichtabsorbierende (insbesondere dunkle) Zonen (33), wobei diese drei unterschiedlichen Zonen (32,33,34) die drei Zustände herbeiführen.

5. Vorrichtung, insbesondere nach einem oder mehreren der vorhergehenden Ansprüche, dadurch gekennzeichnet, daß sich die den dritten Zustand herbeiführenden Zonen (34) innerhalb mindestens einer der übrigen Zonen (32,33) befinden.

6. Vorrichtung, insbesondere nach einem oder mehreren der vorhergehenden Ansprüche, dadurch gekennzeichnet, daß die Zonen (34) mittelkräftiger Lichtreflexion innerhalb der lichtabsorbierenden Zone (33) angeordnet sind.

7. Vorrichtung, insbesondere nach einem oder mehreren der vorhergehenden Ansprüche, dadurch gekennzeichnet, daß die einem Zustand zugeordneten Zonen (34) als gleichmäßig große und gleichmäßig voneinader beabstandete Abschnitte (36) ausgebildet sind, die eine um den Rotor (2) herumlaufende Reihe bilden.

8. Vorrichtung, insbesondere nach einem oder mehreren der vorhergehenden Ansprüche, dadurch gekennzeichnet, daß mehrere, vorzugsweise drei Signalspuren (14,15,16) vorgesehen sind, denen jeweils ein Sensor (26,27,28) zugeordnet ist.

9. Vorrichtung, insbesondere nach Anspruch 7 und/oder 8, dadurch gekennzeichnet, daß die Zonen (32,33,34) auf unterschiedlichen Signalspuren (14,15,16) liegen.

10. Vorrichtung, insbesondere nach einem oder mehreren der vorhergehenden Ansprüche 7 bis 9, dadurch gekennzeichnet, daß die Zonen (34) als dritte Zonen (34) mit mittelkräftiger Lichtreflexion ausgebildet sind.

11. Vorrichtung, insbesondere nach einem oder mehreren der vorhergehenden Ansprüche, dadurch gekennzeichnet, daß die dritten Zonen (34) zur Bildung eines aus Spannungsimpulsen bestehenden Tachosignals (ut) herangezogen sind, das ein Maß für die Rotordrehzahl darstellt.

12. Vorrichtung, insbesondere nach einem oder mehreren der vorhergehenden Ansprüche, dadurch gekennzeichnet, daß die ersten Zonen (32) eine Maximalspannung (u max), die zweiten Zonen (33) eine Minimalspannung (u min) und die dritten Zonen (34) eine mittlere Spannung (u mittel) an den Sensoren (26,27,28) erzeugen.

13. Vorrichtung, insbesondere nach einem oder mehreren der vorhergehenden Ansprüche, dadurch gekennzeichnet, daß die Minimalspannung (u min) ca. 0 Volt ist.

14. Vorrichtung, insbesondere nach einem oder mehreren der vorhergehenden Ansprüche, dadurch gekennzeichnet, daß die der Rotorlageerkennung dienenden Zonen (32,33) entsprechend der Polteilung des Elekromotors (1) um den Rotor (2) herum verlaufend angeordnet sind.

15. Vorrichtung, insbesondere nach einem oder mehreren der vorhergehenden Ansprüche, dadurch gekennzeichnet, daß die Detektoren (88) zur Auswertung der Spannungen (u max, u min, u mittel) einen ersten Schwellenwert (us 1), der zwischen der mittleren Spannung (u mittel) und der Maximalspannung (u max) liegt sowie einen zweiten Schwellenwert (us 2), der zwischen der Minimalspannung (u min) und der mittleren Spannung (u mittel) liegt, verwenden.

16. Vorrichtung, insbesondere nach einem oder mehreren der vorhergehenden Ansprüche, dadurch gekennzeichnet, daß aus den größer als der erste Schwellenwert (us 1) ausgebildeten Spannungsimpulsen der Sensoren (26,27,28) Kommutierungs signale und aus den größer als der zweite (us 2), jedoch kleiner als der erste Schwellenwert (us 1) ausgebildeten Spannungsimpulsen der Sensoren (26,27,28) Tachosignale (ut) gebildet werden.

17. Vorrichtung, insbesondere nach einem oder mehreren der vorhergehenden Ansprüche, dadurch gekennzeichnet, daß die Signalspuren (14,15,16) auf einer der Rotorstirnseiten (13) angeordnet sind.

18. Vorrichtung, insbesondere nach einem oder mehreren der vorhergehenden Ansprüche, dadurch gekennzeichnet, daß der Elektromotor (1) als bürstenloser Gleichstrommotor ausgebildet ist.

FIG.1

FIG. 2

FIG.3

# FIG. 4

EP 0 377 835 A2

FIG.5

## FIG. 6